# EUROPÄISCHE PATENTANMELDUNG

(11) **EP 0 945 363 A1**
(43) Veröffentlichungstag der Anmeldung: **29.09.1999**
(21) Anmeldenummer: 98121765.6
(22) Anmeldetag: 14.11.1998
(51) Int. Cl.: B65D 81/32, B65D 83/76, C08J 9/00, C08K 7/22, C08J 9/32

(54) **Doppelkammer-Kartusche zum Erzeugen eines 2-Komponenten Polyurethanschaums**

(30) Priorität: 21.03.1998 DE 19812442
(71) Anmelder: B & F Formulier- und Abfüll GmbH, 57489 Drolshagen-Iseringhausen (DE)
(72) Erfinder: Wunram, Heinz-Peter, 51580 Reichshof-Hahn (DE); Schneider, Friedhelm, 57489 Drolshagen (DE); Dresbach, Volker, 51580 Reichshof-Wiehl (DE)
(74) Vertreter: Honke, Manfred, Dr.-Ing.

(57) **Zusammenfassung**

Es handelt sich um eine Doppelkammer-Kartusche zum Erzeugen von Polyurethanschaum, wobei die eine Kartuschenkammer eine Polyolkomponente und die andere Kartuschenkammer eine Isocyanatkomponente enthält. Der Isocyanatkomponente sind wasserfrei komprimierbare Füllstoffe zugemischt, damit diese Isocyanatkomponente wie die Polyolkomponente komprimierbar ist. Auf diese Weise werden Dosierschwankungen und ein Fehlverhalten des erzeugten Polyurethanschaumes vermieden.

## Beschreibung

Die Erfindung betrifft eine Doppelkammer-Kartusche zum Erzeugen eines 2-Komponenten Polyurethanschaums, wobei die eine Kartuschenkammer eine Polyolkomponente und die andere Kartuschenkammer eine auf die Polyolkomponente abgestimmte Isocyanatkomponente enthält.

Derartige Doppelkammer-Kartuschen werden mittels Hand- oder Druckluftpistolen durch einen aufgesetzten Statikmischer hindurch ausgepreßt. Die Polyolkomponente und die Isocyanatkomponente treffen erst in dem Statikmischer aufeinander und werden in dem Statikmischer miteinander vermischt. Einige Zeit nach dem Austritt des Mischproduktes aus dem Statikmischer beginnt die Reaktion beider Komponenten und das daraus resultierende Aufschäumverhalten. Die Polyolkomponente besteht im allgemeinen aus unterschiedlichen Polyolen mit einer verschiedenen Anzahl an OH-Gruppen. Ferner werden im allgemeinen Flammschutzmittel, Katalysatoren, Zellregler, Wasser und Verdicker zugegeben. Diese verschiedenen Komponenten werden vermischt. Im Zuge des Vermischens wird zwangsläufig Luft eingeschlagen. Die Luftbeladung, deren Höhe anhand des spezifischen Gewichtes des Mischproduktes ermittelt werden kann, ist zwingend erforderlich, da die Luft zur Kristallisationskeimbildung und einer gleichmäßigen Schaumstruktur zur Senkung der Rohdichte des fertigen Polyurethanschaums benötigt wird. Die Isocyanatkomponente kann aus MDI-Isocyanaten oder modifizierten Prepolymeren mit einer verschiedenen Anzahl an NCO-Gruppen bestehen. Die Isocyanatkomponente muß absolut frei von Luft gehalten werden, da anders in der Luft enthaltene Feuchtigkeit die NCO-Gruppen abbauen wurde. Das hätte eine Kristallbildung zur Folge. Die Anzahl der NCO-Gruppen der Isocyanatkomponente muß exakt auf die Anzahl der OH-Gruppen der Polyolkomponente durch eine entsprechende Modifizierung der Rezeptur abgestimmt werden.

Verwendet werden solche Doppelkammer-Kartuschen insbesondere zum punktuellen Befestigen bzw. Verkleben von beispielsweise Türzargen mit dem Mauerwerk einer Wandöffnung oder anderen Untergründen. Im Zuge punktueller Verklebearbeiten wird die Doppelkammer-Kartusche nicht kontinuierlich, sondern mit Unterbrechungen von beispielsweise 10 bis 20 sec. entleert, um die gewünschten Befestigungspunkte zu erzeugen. In Abhängigkeit von der jeweiligen Reaktionsgeschwindigkeit der Polyol- und Isocyanatkomponente kommt es bei Unterbrechungen der Kartuschenverarbeitung häufig bereits im Statikmischer zu Reaktionen. Diese Reaktionen verursachen gleichsam eine Pfropfenbildung im Statikmischer, wodurch beim Weiterverarbeiten ein erhöhter Gegendruck entsteht, der durch eine stärkere Auspreßkraft überwunden werden muß. Aufgrund dieses Gegendrucks kommt es zwangsläufig zu einer Komprimierung der luftbeladenen Polyolkomponente in deren Kartuschenkammer und folglich zu einem verzögerten Materialeinritt in den Statikmischer. Dagegen läßt sich die Isocyanatkomponente nicht komprimieren und fließt bei Druckbeaufschlagung ihrer Kartuschenkammer sofort in den Statikmischer ab. Daraus resultieren falsche Mischungsverhältnisse in bezug auf die Polyol- und Isocyanatkomponente. Falsche Mischungsverhältnisse führen zu einer Schrumpfung des erzeugten Polyurethanschaums. Diese Schrumpfung wiederum bewirkt beim beispielsweise Verkleben von Türzargen zu Zargendeformationen, daß schließlich die Tür nicht mehr ins Schloß fällt.

Der Erfindung liegt das technische Problem zugrunde, eine Doppelkammer-Kartusche der eingangs beschriebenen Ausfuhrungsform zu schaffen, welche stets ein richtiges Mischungsverhältnis von Polyol- und Isocyanatkomponente vermeidet und ein Fehlverhalten des erzeugten Polyurethanschaums ausschließt.

Diese Aufgabe löst die Erfindung bei einer gattungsgemäßen Doppelkammer-Kartusche dadurch, daß der Isocyanatkomponente wasserfreie und um ein vorgegebenes Maß komprimierbare Füllstoffe zugemischt sind. - Die Erfindung geht von der Erkenntnis aus, daß falsche Mischungsverhältnisse von Polyol- und Isocyanatkomponente nicht aus diesen Komponenten selbst resultieren, wenn die Anzahl der NCO-Gruppen exakt auf die Anzahl der OH-Gruppen abgestimmt ist, sondern auf Dosierschwankungen der beiden Komponenten zurückzuführen sind. Aus diesen Dosierschwankungen resultiert, daß in Teilen des ausgepreßten Polyurethanschaumes die Verhältnisse von NCO-Gruppen und OH-Gruppen nicht mehr übereinstimmen und zu dem beschriebenen Fehlverhalten des Polyurethanschaumes führen. Nach Lehre der Erfindung werden solche Dosierschwankungen nunmehr vermieden, weil sich die Isocyanatkomponente in gleichem Maße wie die Polyolkomponente aufgrund der komprimierbaren Füllstoffe komprimieren läßt. Folglich wird ein verzögerter, jedoch gleichzeitiger Materialeintritt sowohl der Polyolkomponente als auch der Isocyanatkomponente in den Statikmischer auch nach längeren Arbeitsunterbrechungen erreicht, so daß nicht länger Dosierschwankungen bei einem erneuten Beginn des Applizierens auftreten, vielmehr wird jegliches Fehlverhalten des ausgepreßten Polyurethanschaumes vermieden, so daß nicht länger schlechte mechanische Eigenschaften und ein nachteiliges Schrumpfverhalten des Polyurethanschaumes in Kauf genommen werden müssen.

Weitere erfindungswesentliche Merkmale sind im folgenden aufgeführt. So sieht die Erfindung vor, daß der Isocyanatkomponente Füllstoffe mit einer der Polyolkomponente entsprechenden Komprimierbarkeit zugemischt sind und diese Zumischung homogen ist. Als Füllstoffe können komprimierbare Kunststoffflocken oder dergleichen Kunststoffpartikel zugemischt sein. Es kann sich bei den Füllstoffen aber auch um komprimierbare Kunststoffhohlkugeln handeln. Selbst die Zumischung trockener Gase als Füllstoffe ist im Rahmen der Erfindung denkbar. Von besonderer Bedeutung bleibt für sämtliche Ausführungsformen die Tatsache, daß es sich um wasserfreie Füllstoffe handeln muß. Denn - wie bereits eingangs erläutert - würde Feuchtigkeit die Anzahl der NCO-Gruppen abbauen und zwangsläufig zu einer Kristallbildung führen. Sofern Füllstoffe auf Kunststoffbasis verwendet werden, bieten sich Styrol-Polymerisate bzw. Copolymerisate oder Polystyrol an. Die Füllstoffe auf Kunststoffbasis weisen zweckmäßigerweise ein spezifisches Gewicht von 0,01 g/ml bis zu 0,3 g/ml in Abhängigkeit von der jeweils geforderten Komprimierung der Isocyanatkomponente auf.

Im folgenden wird die Erfindung anhand einer lediglich ein Ausführungsbeispiel darstellenden Zeichnung näher erläutert.

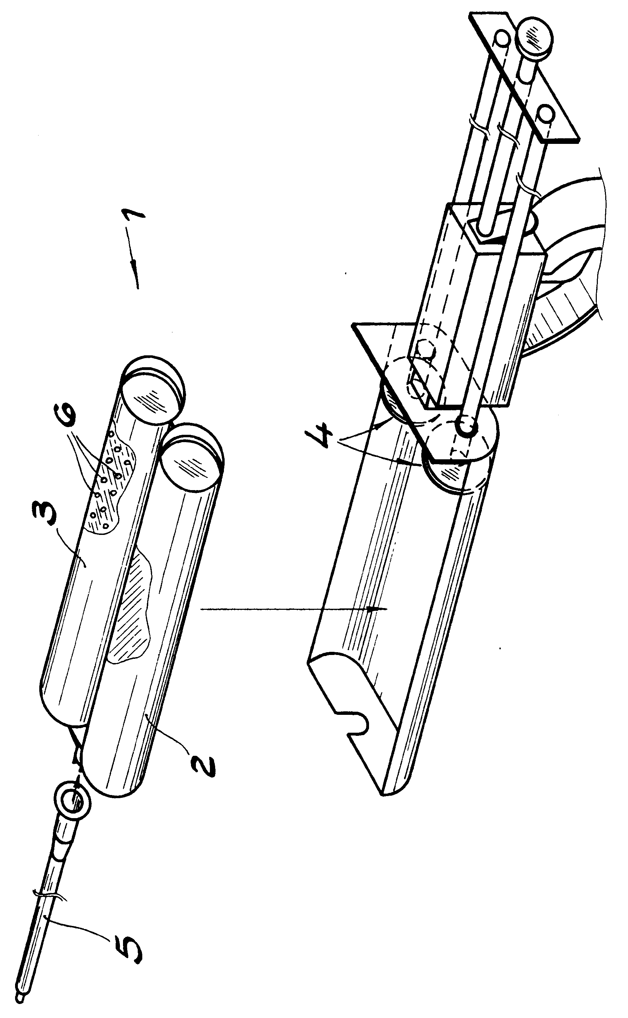

Die einzige Figur zeigt in explosiver Darstellung eine teilweise geschnittene Doppelkammer-Kartusche mit einem schematisch dargestellten Doppelkolben einer Handpistole zum Auspressen der beiden Kartuschenkammern und einem nachgeordneten Statikmischer.

Die in der Figur dargestellte Doppelkammer-Kartusche 1 dient zum Erzeugen eines 2-Komponenten Polyurethanschaums. Die beiden Kartuschenkammern 2, 3 sind nebeneinander als gleichsam Zwillingskammern angeordnet und werden zum Auspressen in eine Hand- oder Druckluftpistole mit einem angedeuteten Doppelkolben 4 eingelegt. Austrittsseitig wird an die beiden Kartuschenkammern 2, 3 ein gemeinsamer Statikmischer 5 angeschlossen. Die eine Kartuschenkammer 2 enthält eine Polyolkomponente, während die andere Kartuschenkammer 3 eine auf die Polyolkomponente abgestimmte Isocyanatkomponente enthält. Der Isocyanatkomponente sind wasserfreie und um ein vorgegebenes Maß komprimierbare Füllstoffe 6 zugemischt. Um ein vorgegebenes Maß bedeutet, daß sowohl die Polyolkomponente als auch die Isocyanatkomponente um ein gleiches Maß komprimierbar sind. Aus diesem Grund werden Füllstoffe 6 mit einer der Polyolkomponente entsprechenden Komprimierbarkeit homogen zugemischt. Nach dem Ausführungsbeispiel handelt es sich bei den Füllstoffen um komprimierbare Kunststoffhohlkugeln 6 aus Styrol-Polymerisaten. Bei derartigen Kunststoffhohlkugeln 6 stört nicht, wenn diese mit Luft gefüllt sind, weil die Luft im Zuge der Kompression nicht austreten kann und folglich die in der Luft enthaltene Feuchtigkeit nicht die Anzahl der NCO-Gruppen der Isocyanatkomponente reduzieren kann. Im Ergebnis entfällt nunmehr das Auftreten von Dosierschwankungen im Zuge der Schaumerzeugung.

## Patentansprüche

1. Doppelkammer-Kartusche zum Erzeugen eines 2-Komponenten Polyurethanschaums, wobei die eine Kartuschenkammer eine Polyolkomponente und die andere Kartuschenkammer eine auf die Polyolkomponente abgestimmte Isocyanatkomponente enthält, **dadurch gekennzeichnet**, daß der Isocyanatkomponente wasserfreie und um ein vorgegebenes Maß komprimierbare Füllstoffe (6) zugemischt sind.

2. Doppelkammer-Kartusche nach Anspruch 1, dadurch gekennzeichnet, daß Füllstoffe (6) mit einer der Polyolkomponente entsprechenden Komprimierbarkeit zugemischt sind.

3. Doppelkammer-Kartusche nach Anspruch 1 oder 2, dadurch gekennzeichnet, daß die Zumischung homogen ist.

4. Doppelkammer-Kartusche, dadurch gekennzeichnet, daß als Füllstoffe (6) komprimierbare Kunststoffflocken zugemischt sind.

5. Doppelkammer-Kartusche nach einem der Ansprüche 1 bis 3, dadurch gekennzeichnet, daß als Füllstoffe (6) komprimierbare Kunststoffhohlkugeln zugemischt sind.

6. Doppelkammer-Kartusche nach einem der Ansprüche 1 bis 3, dadurch gekennzeichnet, daß als Füllstoffe (6) trockene Gase zugemischt sind.

7. Doppelkammer-Kartusche nach einem der Ansprüche 1 bis 5, dadurch gekennzeichnet, daß die Füllstoffe (6) auf Kunststoffbasis aus Styrol-Polymerisaten bzw. Copolymerisaten oder Polystyrol bestehen.

8. Doppelkammer-Kartusche nach einem der Ansprüche 1 bis 7, dadurch gekennzeichnet, daß die Füllstoffe (6) auf Kunststoffbasis ein spezifisches Gewicht von 0,01 g/ml bis zu 0,3 g/ml in Abhängigkeit von der jeweils geforderten Komprimierung der Isocyanatkomponente aufweisen.
